(19) Europäisches Patentamt
European Patent Office
Office européen des brevets

(11) **EP 4 745 197 A1**

(12) **EUROPEAN PATENT APPLICATION**
published in accordance with Art. 153(4) EPC

(43) Date of publication:
**20.05.2026 Bulletin 2026/21**

(21) Application number: 23950440.0

(22) Date of filing: **31.10.2023**

(51) International Patent Classification (IPC):
***C08L 95/00*** (2006.01)      ***B01J 13/02*** (2006.01)
***C08K 9/10*** (2006.01)

(52) Cooperative Patent Classification (CPC):
**B01J 13/02; B01J 13/12; C08K 5/05; C08K 5/07;
C08K 5/101; C08K 5/105; C08K 5/13; C08K 9/10;
C08L 95/00**

(86) International application number:
**PCT/CN2023/128369**

(87) International publication number:
**WO 2025/043867 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.09.2023 CN 202311125688**

(71) Applicants:
• **China Petroleum & Chemical Corporation
Beijing 100728 (CN)**
• **Sinopec Dalian Research Institute of
Petroleum and Petrochemicals Co., Ltd.
Lushunkou District
Dalian, Liaoning 116045 (CN)**

(72) Inventors:
• **SONG, Lechun**
**Dalian, Liaoning 116045 (CN)**
• **LI, Zhijun**
**Dalian, Liaoning 116045 (CN)**
• **CAO, Peng**
**Dalian, Liaoning 116045 (CN)**
• **LI, Chenze**
**Dalian, Liaoning 116045 (CN)**
• **WANG, Xingyue**
**Dalian, Liaoning 116045 (CN)**

(74) Representative: **Hoffmann Eitle
Patent- und Rechtsanwälte PartmbB
Arabellastraße 30
81925 München (DE)**

(54) **ASPHALT ADDITIVE, AND ASPHALT COMPOSITION AND PREPARATION METHOD THEREFOR**

(57) The present invention relates to the technical field of road asphalts, and disclosed are an asphalt additive, and an asphalt composition and a preparation method therefor. The asphalt additive contains a first microcapsule, a second microcapsule, and a third microcapsule, wherein the first microcapsule, the second microcapsule, and the third microcapsule each comprise a capsule core and a capsule wall, the capsule core is wrapped in the capsule wall, the capsule core contains an active component, the capsule wall thickness of the first microcapsule is 0.5-2 $\mu$m, the capsule wall thickness of the second microcapsule is greater than 2 $\mu$m and less than or equal to 3 $\mu$m, and the capsule wall thickness of the third microcapsule is greater than 3 $\mu$m and less than or equal to 5 $\mu$m. The asphalt composition of the present invention has a long storage and service life, and can effectively reduce the emission of asphalt fumes during construction, thereby reducing pollution to the environment.

**Description**

**CROSS-REFERENCE TO RELATED APPLICATIONS**

The application claims the benefit of the Chinese patent application No. "202311125688.1", filed on September 1, 2023, the content of which is specifically and entirely incorporated herein by reference.

**TECHNICAL FIELD**

The present invention relates to the technical field of road asphalts, in particular to an asphalt additive, an asphalt composition and a preparation method therefor, more particularly to a sanitized asphalt additive, a sanitized asphalt composition and a preparation method therefor.

**BACKGROUND ART**

The asphalt pavement is the main type of expressway, the traditional hot mixing and hot paving process is still used in the pavement construction operations, the asphalt will contact with oxygen gas in the air and carry out reaction during the construction operations, on one hand, a condensation reaction is implemented to form polycyclic aromatic hydrocarbons having a higher molecular weight, which are further condensed into a gel and an asphalt material; on the other hand, the asphalt molecules are decomposed under the heating condition to generate compounds having a lower molecular weight, which will form asphalt fumes through volatilization, thereby imposing serious damages to the ecological balance, polluting the environment and injuring the health of human body.

In view of the disorganized release of Volatile Organic Compounds (VOCs) during the paving process of asphalt pavement, it is difficult to conduct the collection and treatment of VOCs in the whole process, thus it is urgent to solve the problem concerning how to reduce release of asphalt fumes at the source, carry out the cleaned operation of asphalt pavement, and promote the harmonious development of the transport industry and the social economy.

Chinese patent application CN101842426A discloses a process for reducing the odor of bitumen by mixing active agents and a diluent, however, the added active agents have poor reactivity and a limited action time, and cannot perform the effects for a long time.

Chinese patent application CN109749466A discloses a solution of reducing the emission of asphalt fumes by means of the additives such as metal-organic framework compounds, inorganic adsorbing materials, reaction type odor inhibitors, and free radical capturing agent, but the inorganic adsorbing materials and the like exhibit poor compatibility with asphalt, affecting the properties of asphalt, there is also the defect that the active ingredients have a short action time.

Chinese patent application CN103242496A discloses a room-temperature self-repairing type thermoplastic polymer material based on a multi-layer microcapsule, and a preparation method thereof, wherein a fourth layer capsule wall of the multi-layer microcapsule is made of paraffin wax and chlorinated paraffin, which are dissolved in asphalt; a third layer capsule wall of the multi-layer microcapsule is made of silica or titania with poor compatibility with asphalt, both affect the performance of asphalt; although the self-repairing type material is applicable to the repair of thermoplastic polymer material, it is not suitable for the asphalt material.

To sum up, the prior art merely adds an inorganic filler or an active component simply into the asphalt, which results in disassociation and delamination problems of the inorganic filler and the asphalt, and the defects that the active component has a limited action time and cannot perform the effects for a long time.

**SUMMARY OF THE INVENTION**

The present invention aims to overcome the defects in the prior art that the asphalt pavement will emit asphalt fumes (including the Volatile Organic Compounds), thereby causing pollution to the environment, and provides an asphalt additive, and an asphalt composition and a preparation method therefor. The asphalt composition including the asphalt additive of the present invention has a long storage and service life, and can effectively reduce the emission of asphalt fumes during construction process, thereby reducing pollution to the environment.

In order to achieve the above object, the first aspect of the present invention provides an asphalt additive comprising a first microcapsule, a second microcapsule, and a third microcapsule, wherein the first microcapsule, the second microcapsule, and the third microcapsule each comprise a capsule core and a capsule wall, the capsule core is wrapped in the capsule wall, the capsule core comprises an active component; the capsule wall thickness of the first microcapsule is within the range of 0.5-2μm, the capsule wall thickness of the second microcapsule is greater than 2μm and less than or equal to 3μm, and the capsule wall thickness of the third microcapsule is greater than 3μm and less than or equal to 5μm.

Preferably, the mass ratio of the first microcapsule, the second microcapsule, and the third microcapsule is 1:

(0.25-4): (0.25-4).

Preferably, the capsule wall in the first microcapsule, the second microcapsule and the third microcapsule comprises: an inner wall layer made of resin, and an outer wall layer made of a rubber material.

Preferably, the mass ratio of the inner wall layer and the outer wall layer is (2.4-5) :1.

Preferably, the resin is at least one selected from the group consisting of melamine resin, urea formaldehyde resin and polymethyl methacrylate, more preferably melamine resin.

Preferably, the rubber material is at least one selected from the group consisting of chlorinated rubber, styrene-butadiene rubber, and chloroprene rubber.

Preferably, in the first microcapsule, the second microcapsule and the third microcapsule, the elastic modulus of the microcapsule and the thickness of the capsule wall satisfy the following formula:

$$Y = 0.42X^2 - 0.92X + T$$

wherein Y is the elastic modulus of the microcapsule, and the unit thereof is GPa; X is the thickness of the capsule wall, and the unit thereof is $\mu$m; and T is $1\pm0.1$;

the elastic modulus of the microcapsule is obtained by performing a mechanical property test on the microcapsule by using a nano-indentation instrument, and the thickness of the capsule wall is obtained by performing a frozen section test on the microcapsule by using a scanning electron microscope.

Preferably, the mass ratio of the capsule core to the capsule wall in the first microcapsule is 1: (0.9-1.5); the mass ratio of the capsule core to the capsule wall in the second microcapsule is 1: (1.5-2.2); the mass ratio of the capsule core to the capsule wall in the third microcapsule is 1: (2.2-3).

Preferably, the active component is an inhibitor for inhibiting the release of asphalt fumes, more preferably at least one selected from the group consisting of aldehyde compounds, ketone compounds, alcohol compounds, phenol compounds and ester compounds.

Preferably, the aldehyde compounds are selected from the group consisting of fatty aldehyde having 7 or more carbon atoms and aromatic aldehyde having 6 or more carbon atoms, more preferably at least one selected from the group consisting of p-methyl benzaldehyde, decyl aldehyde, o-carboxy benzaldehyde, p-isopropyl benzaldehyde, cinnamyl aldehyde, p-hydroxy benzaldehyde, p-methoxy benzaldehyde, 2-methyl-3-(3,4-methylene-dioxyphenyl) propyl aldehyde, 3,4-methylene dioxy benzaldehyde, 3-(4-isopropyl phenyl)-2-methyl propyl aldehyde, ethyl vanillin, phenyl acetaldehyde, anisaldehyde, nonadien-2,6-aldehyde, 2,6-dimethyl-2,6-octadienal, vanillin, citronellal, neral, hydroxyl methyl pentyl cyclohexene acetal, p-diethylamino benzaldehyde, and undecylenic aldehyde.

Preferably, the ketone compounds are selected from the group consisting of aliphatic ketones having 8 or more carbon atoms and aromatic ketones having 8 or more carbon atoms, more preferably at least one selected from the group consisting of 6-methyl-3,5-heptadiene-2-one, 2-undecanone, acetophenone, ionone, irone, methyl ionone, damascenone and dihydro damascenone.

Preferably, the alcohol compounds are alcohols with more than 6 carbon atoms, more preferably at least one selected from the group consisting of cinnamyl alcohol, menthol, cis-3,7-dimethyl-2,6-octanedienol, citronellol, geraniol, myrcenol, 2,6,10-trimethyl-2,6,10-dodecatrien-12-ol, lavender alcohol, benzyl alcohol, 2-phenyl ethanol, dihydromyrcenol, tetrahydrogeraniol and neralidol.

Preferably, the phenol compounds are phenols having 6 or more carbon atoms, more preferably at least one selected from the group consisting of thymol, ethyl maltol, methyl maltol, 3-propenyl-6-ethoxyphenol and isoeugenol.

Preferably, the ester compounds are esters with more than 7 carbon atoms, more preferably at least one selected from the group consisting of methyl salicylate, methyl cinnamate, ethyl cinnamate, ethyl phenylacetate, methyl phenylacetate, geranyl phenylacetate, phenethyl phenylacetate, isoamyl phenylacetate, benzyl salicylate, p-methylbenzyl acetate, benzyl acetate, isobutyl benzoate, isoamyl salicylate, benzyl cinnamate, phenethylethyl cinnamate, linalyl formate, linalyl acetate, linalyl isobutyrate, menthyl acetate, terpinyl acetate and bornyl acetate.

Preferably, the active component in the first microcapsule is selected from aldehyde compounds and ketone compounds, the active component in the second microcapsule is selected from alcohol compounds and phenol compounds, and the active component in the third microcapsule is selected from ester compounds.

The second aspect of the present invention provides an asphalt composition comprising asphalt and the aforementioned asphalt additive.

Preferably, the asphalt additive is contained in an amount of 0.1-2 parts by weight, more preferably 0.15-0.6 part by weight, relative to 100 parts by weight of the asphalt.

Preferably, the asphalt composition further comprises an antioxidant, which is contained in an amount of 0.01-0.1 parts by weight, relative to 100 parts by weight of the asphalt.

Preferably, the antioxidant is at least one selected from the group consisting of bis(3,5-tri-tert-butyl-4-hydroxyphenyl) sulfide, p-tert-butyl catechol, 3,5-di-tert-butyl-4-hydroxy benzyl diethyl phosphonate, β-(3,5-di-tert-butyl-4-hydroxyphenyl) propionate n-octadecanol ester, β-(3,5-di-tert-butyl-4-hydroxyphenyl) propionate isooctanol ester, 4,4'-thiobis(6-tert-butyl-3-methylphenol), tetra[β-(3,5-di-tert-butyl-4-hydroxyphenyl)propionate] pentaerythritol ester, 1,3,5-trimethyl-2,4,6-tris (3,5-di-tert-butyl-4-hydroxybenzyl) benzene, 2,6-di-tert-butyl-p-methyl phenol, 3,5-di-tert-butyl-4-hydroxybenzoic acid, 3-(3,5-di-tert-butyl-4-hydroxyphenyl) propanoic acid, 3-(3,5-di-tert-butyl-4-hydroxyphenyl) acrylic acid, 3-(3,5-dimethyl-4-hydroxyphenyl) acrylic acid, 3-(3,5-dimethoxy-4-hydroxyphenyl) acrylic acid, and 3-(3-methoxy-4-hydroxyphenyl) acrylic acid.

Preferably, the asphalt is at least one selected from the group consisting of straight-run asphalt, polymer-modified asphalt, and natural asphalt.

Preferably, the needle penetration degree of the asphalt is 30-210 1/10 mm.

The third aspect of the present invention provides a method for preparing the asphalt composition, the method comprises the following processes:

(1) Preparing a first microcapsule, a second microcapsule and a third microcapsule respectively, the preparation process includes the following steps:

S1: blending an active component, an emulsifier and water to form an oil-in-water emulsion;
S2: reacting the oil-in-water emulsion with a resin pre-polymer, then filtering, washing and drying to obtain a pre-coat material;
S3: mixing a rubber material with the pre-coat material in the presence of a volatile solvent, and then mixing the obtained mixture with water, raising the temperature till volatilization of the volatile solvent to prepare a microcapsule;

(2) Mixing the molted asphalt, the first microcapsule, the second microcapsule, the third microcapsule, and an optional antioxidant.

Preferably, the mass ratio of dosages of the active component, the emulsifier and water in step S1 is 1: (0.05-0.09): (6-9).

Preferably, the pH of the oil-in-water emulsion is adjusted to 5 or less, more preferably 2-4, before reacting the oil-in-water emulsion with the resin pre-polymer in step S2.

Preferably, the resin pre-polymer in step S2 is a melamine resin pre-polymer.

Preferably, the preparation method for the melamine resin pre-polymer comprises: dissolving and mixing melamine with a formaldehyde solution and water, adjusting the pH to 7.5-9.5, and then carrying out the reaction under the stirring and constant temperature water bath condition of 60-90°C for 0.5-3.5h.

Preferably, the formaldehyde solution has a concentration within the range of 30-40 wt.%.

Preferably, the mass ratio of dosages of the melamine, the formaldehyde solution and water is 1: (2-3): (8-10).

Preferably, the mass ratio of the dosages of the rubber material, the volatile solvent and water in step S3 is 1: (10-20): (50-150).

Preferably, the emulsifier is at least one selected from the group consisting sodium stearate, sodium lauryl sulphate, sodium dodecyl benzene sulfonate, cetyl trimethyl ammonium chloride, cetyl trimethyl ammonium bromide, cetyl dimethyl hydroxyethyl ammonium chloride, nonylphenol polyoxyethylene ether, octylphenol polyoxyethylene ether, and cetyl polyoxyethylene ether.

Preferably, the volatile solvent is at least one selected from the group consisting carbon tetrachloride, methylene dichloride and trichloroethylene.

In the asphalt additive of the present invention, the three microcapsules having different slow release speeds are used in combination, such that the different active components are released at different slow release rates, and the action time of the active components is extended. In addition, the asphalt composition includes an asphalt additive, such that the asphalt composition has a long storage and service life, and can effectively reduce the emission of asphalt fumes during construction, thereby reducing pollution to the environment.

In a preferred embodiment, the active component in the capsule core of the microcapsule is selected as an inhibitor for inhibiting release of the asphalt fumes, and the capsule wall comprises an inner wall layer and an out wall layer, wherein the inner wall layer is made of resin, and the outer wall layer is made of a rubber material. The rubber material as the outer wall layer is uniformly wrapped outside the inner wall layer in a form of a dense film material, so that the microcapsule as a whole can ensures a certain strength, and can assure its effective integration with the asphalt and exhibit the desirable compatibility.

## DESCRIPTION OF THE PREFERRED EMBODIMENT

The specific embodiments of the present invention will be described in detail below. It should be understood that the specific embodiments described herein merely serve to illustrate and explain the present invention, instead of imposing limitations thereto.

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The asphalt additive according to the present invention comprises a first microcapsule, a second microcapsule, and a third microcapsule, wherein the first microcapsule, the second microcapsule, and the third microcapsule each comprise a capsule core and a capsule wall, the capsule core is wrapped in the capsule wall, the capsule core comprises an active component; the capsule wall thickness of the first microcapsule is within the range of 0.5-2$\mu$m, the capsule wall thickness of the second microcapsule is greater than 2$\mu$m and less than or equal to 3$\mu$m, and the capsule wall thickness of the third microcapsule is greater than 3$\mu$m and less than or equal to 5$\mu$m.

In the first microcapsule, the second microcapsule and the third microcapsule, the elastic modulus of the microcapsule and the thickness of the capsule wall satisfy the following formula:

$$Y = 0.42X^2 - 0.92X + T$$

Wherein Y is the elastic modulus of the microcapsule, and the unit thereof is GPa; X is the thickness of the capsule wall, and the unit thereof is $\mu$m; and T is $1 \pm 0.1$;

The elastic modulus of the microcapsule is obtained by performing a mechanical property test on the microcapsule by using a nano-indentation instrument, and the thickness of the capsule wall is obtained by performing a frozen section test on the microcapsule by using a scanning electron microscope.

In the asphalt additive according to the present invention, the mass ratio of the capsule core to the capsule wall in the first microcapsule is 1: (0.9-1.5); the mass ratio of the capsule core to the capsule wall in the second microcapsule is 1: (1.5-2.2); the mass ratio of the capsule core to the capsule wall in the third microcapsule is 1: (2.2-3).

In the microcapsule, the thickness of the capsule wall may be within the range of 0.5-5$\mu$m, specifically, for example, the thickness may be 0.5$\mu$m, 0.6$\mu$m, 0.7$\mu$m, 0.8$\mu$m, 0.9$\mu$m, 1$\mu$m, 1.1$\mu$m, 1.2$\mu$m, 1.3$\mu$m, 1.4$\mu$m, 1.5$\mu$m, 1.6$\mu$m, 1.7$\mu$m, 1.8$\mu$m, 1.9$\mu$m, 2$\mu$m, 2.1$\mu$m, 2.2$\mu$m, 2.3$\mu$m, 2.4$\mu$m, 2.5$\mu$m, 2.6$\mu$m, 2.7$\mu$m, 2.8$\mu$m, 2.9$\mu$m, 3$\mu$m, 3.1$\mu$m, 3.2$\mu$m, 3.3$\mu$m, 3.4$\mu$m, 3.5$\mu$m, 3.6$\mu$m, 3.7$\mu$m, 3.8$\mu$m, 3.9$\mu$m, 4$\mu$m, 4.1$\mu$m, 4.2$\mu$m, 4.3$\mu$m, 4.4$\mu$m, 4.5$\mu$m, 4.6$\mu$m, 4.7$\mu$m, 4.8$\mu$m, 4.9$\mu$m or 5$\mu$m.

The size of the microcapsules may be 50$\mu$m or less, preferably 20$\mu$m or less, more preferably 3-15$\mu$m.

In the microcapsules, in a case of preferably, the capsule wall comprises an inner wall layer made of resin and an outer wall layer made of a rubber material. In this case of preferably, on one hand, the microcapsule has a certain strength that meets the requirements of pavement use; on the other hand, the rubber material, as an outer wall layer, can be effectively integrated with the asphalt, the rubber material has excellent adhesion and forms a strong bonding with the resin (particularly melamine resin) as an inner wall layer.

Further preferably, the mass ratio of the inner wall layer and the outer wall layer is (2.4-5) : 1, the specific examples of the mass ratio may be 2.4:1, 2.5:1, 2.6:1, 2.7:1, 2.8:1, 2.9:1, 3:1, 3.1:1, 3.2:1, 3.3:1, 3.4:1, 3.5:1, 3.6:1, 3.7:1, 3.8:1, 3.9:1, 4:1, 4.1:1, 4.2:1, 4.3:1, 4.4:1, 4.5:1, 4.6:1, 4.7:1, 4.8:1, 4.9:1 or 5:1.

When the capsule wall of the microcapsule includes an inner wall layer and an outer wall layer, the mass ratio of the capsule core, inner wall layer and outer wall layer in the first microcapsule is 1: (0.7-1): (0.2-0.3); the mass ratio of the capsule core, inner wall layer and outer wall layer in the second microcapsule is 1: (1.2-1.5): (0.4-0.5); the mass ratio of the capsule core, inner wall layer and outer wall layer in the third microcapsule is 1: (1.7-2): (0.6-0.7).

In the present invention, the content of the capsule core, the content of the capsule wall, and the mass of the inner and outer layers of the capsule wall of the microcapsule are measured with the following process: adding the microcapsule into a volatile solvent (the volatile solvent may be one or more selected from the group consisting of carbon tetrachloride, methylene chloride, and trichloroethylene), after sufficient dissolution and filtration, subjecting the obtained first solid powder to a sufficient drying, the mass difference between the initial microcapsule and the first solid powder is denoted as the mass of an outer layer of the capsule wall; further subjecting the obtained first solid powder to a sufficient milling, adding it into toluene, after sufficient dissolution and filtration, subjecting the obtained second solid powder to a sufficient drying, the mass difference between the first solid powder and the second solid powder is denoted as the mass of the capsule core; the mass of an inner layer of the capsule wall is obtained by subtracting the mass of an outer layer of the capsule wall and the mass of the capsule core from the mass of the microcapsule.

In the microcapsule, the resin may be at least one selected from the group consisting of melamine resin, urea formaldehyde resin and polymethyl methacrylate, most preferably melamine resin.

In the microcapsule, the rubber material may be at least one selected from the group consisting of chlorinated rubber, styrene-butadiene rubber, and chloroprene rubber.

In the microcapsule, the active component is preferably an inhibitor for inhibiting the release of asphalt fumes. When the active component in the microcapsule is an inhibitor for inhibiting the release of asphalt fumes, the structure of the microcapsule can extend the action time of the active component such that the asphalt composition has a longer storage and service life, the asphalt composition can effectively reduce the emission of asphalt fumes during construction process, thereby reducing pollution to the environment.

According to the present invention, the inhibitor for inhibiting the release of asphalt fumes is preferably at least one selected from the group consisting of aldehyde compounds, ketone compounds, alcohol compounds, phenol compounds and ester compounds.

In the present invention, the aldehyde compounds may be at least one selected from the group consisting of fatty aldehyde having 7 or more carbon atoms and aromatic aldehyde having 6 or more carbon atoms. In a case of preferably, the aldehyde compound is at least one of the C7-C13 fatty aldehyde and C6-C13 aromatic aldehyde. Specifically, the aldehyde compound is at least one selected from the group consisting of p-methyl benzaldehyde, decyl aldehyde, o-carboxy benzaldehyde, p-isopropyl benzaldehyde, cinnamyl aldehyde, p-hydroxy benzaldehyde, p-methoxy benzaldehyde, 2-methyl-3-(3,4-methylene-dioxyphenyl) propyl aldehyde, 3,4-methylene dioxy benzaldehyde, 3-(4-isopropyl phenyl)-2-methyl propyl aldehyde, ethyl vanillin, phenyl acetaldehyde, anisaldehyde, nonadien-2,6-aldehyde, 2,6-dimethyl-2,6-octadienal, vanillin, citronellal, neral, hydroxyl methyl pentyl cyclohexene acetal, p-diethylamino benzaldehyde, and undecylenic aldehyde.

In the present invention, the ketone compounds may be at least one selected from the group consisting of aliphatic ketones having 8 or more carbon atoms and aromatic ketones having 8 or more carbon atoms. In a case of preferably, the ketone compound is at least one of the C8-C11 aliphatic ketone and C8-C14 aromatic ketone. Specifically, the ketone compound is at least one selected from the group consisting of 6-methyl-3,5-heptadiene-2-one, 2-undecanone, acetophenone, ionone, irone, methyl ionone, damascenone and dihydro damascenone.

According to the present invention, the alcohol compounds are alcohols with more than 6 carbon atoms, preferably C7-C15 alcohol. In particular, the alcohol compound is at least one selected from the group consisting of cinnamyl alcohol, menthol, cis-3,7-dimethyl-2,6-octanedienol, citronellol, geraniol, myrcenol, 2,6,10-trimethyl-2,6,10-dodecatrien-12-ol, lavender alcohol, benzyl alcohol, 2-phenyl ethanol, dihydromyrcenol, tetrahydrogeraniol and neralidol.

In the present invention, the phenol compounds are phenols having 6 or more carbon atoms, preferably C6-C15 phenol. In particular, the phenol compound is at least one selected from the group consisting of thymol, ethyl maltol, methyl maltol, 3-propenyl-6-ethoxyphenol and isoeugenol.

In the present invention, the esters compounds are esters with more than 7 carbon atoms, preferably C8-C17 ester. Specifically, the ester compound is at least one selected from the group consisting of methyl salicylate, methyl cinnamate, ethyl cinnamate, ethyl phenylacetate, methyl phenylacetate, geranyl phenylacetate, phenethyl phenylacetate, isoamyl phenylacetate, benzyl salicylate, p-methylbenzyl acetate, benzyl acetate, isobutyl benzoate, isoamyl salicylate, benzyl cinnamate, phenethylethyl cinnamate, linalyl formate, linalyl acetate, linalyl isobutyrate, menthyl acetate, terpinyl acetate and bornyl acetate.

In the asphalt additive of the present invention, in a case of preferably, the active component in the first microcapsule is selected from aldehyde compounds and ketone compounds, the active component in the second microcapsule is selected from alcohol compounds and phenol compounds, and the active component in the third microcapsule is selected from ester compounds. If the active components in the various microcapsules are configured in such a manner, the different active components are released at different slow release rates, thereby producing an obviously desirable effect for inhibiting the emission of asphalt fumes.

In the asphalt additive of the present invention, the mass ratio of the first microcapsule, the second microcapsule, and the third microcapsule is preferably 1: (0.25-4): (0.25-4).

The asphalt composition of the present invention comprises asphalt and the aforementioned asphalt additive. In the asphalt composition of the present invention, the addition of the asphalt additive causes that the asphalt composition has a longer storage and service life, and can effectively reduce the emission of asphalt fumes during construction, thereby reducing pollution to the environment.

In the asphalt composition according to the present invention, the asphalt additive may be contained in an amount of 0.1-2 parts by weight, preferably 0.15-0.6 part by weight, relative to 100 parts by weight of the asphalt.

In the present invention, the asphalt composition may further comprise an antioxidant. The content of the antioxidant may be a conventional choice in the art. Specifically, the content of the antioxidant may be 0.01-0.1 part by weight, preferably 0.02-0.08 part by weight, relative to 100 parts by weight of the asphalt.

In the asphalt composition of the present invention, the asphalt may be at least one selected from the group consisting of straight-run asphalt, polymer-modified asphalt, and natural asphalt. In a case of preferably, the needle penetration degree of the asphalt is 30-210 1/10 mm.

In the asphalt composition of the present invention, the antioxidant may be a conventional choice in the field. In a case of preferably, antioxidant is at least one selected from the group consisting of bis(3,5-tri-tert-butyl-4-hydroxyphenyl) sulfide, p-tert-butyl catechol, 3,5-di-tert-butyl-4-hydroxy benzyl diethyl phosphonate, β-(3,5-di-tert-butyl-4-hydroxyphenyl) propionate n-octadecanol ester, β-(3,5-di-tert-butyl-4-hydroxyphenyl) propionate isooctanol ester, 4,4'-thiobis(6-tert-butyl-3-methylphenol), tetra[β-(3,5-di-tert-butyl-4-hydroxyphenyl)propionate] pentaerythritol ester, 1,3,5-trimethyl-2,4,6-tris (3,5-di-tert-butyl-4-hydroxybenzyl) benzene, 2,6-di-tert-butyl-p-methyl phenol, 3,5-di-tert-butyl-4-hydroxybenzoic acid, 3-(3,5-di-tert-butyl-4-hydroxyphenyl) propanoic acid, 3-(3,5-di-tert-butyl-4-hydroxyphenyl) acrylic acid, 3-(3,5-dimethyl-4-hydroxyphenyl) acrylic acid, 3-(3,5-dimethoxy-4-hydroxyphenyl) acrylic acid, and 3-(3-methoxy-4-hydroxyphenyl) acrylic acid.

The method for preparing the asphalt composition may comprise the following processes:

(1) Preparing a first microcapsule, a second microcapsule and a third microcapsule respectively, the preparation process includes the following steps:

S1: blending an active component, an emulsifier and water to form an oil-in-water emulsion;
S2: reacting the oil-in-water emulsion with a resin pre-polymer, then filtering, washing and drying to obtain a pre-coat material;
S3: mixing a rubber material with the pre-coat material in the presence of a volatile solvent, and then mixing the obtained mixture with water, raising the temperature till volatilization of the volatile solvent to prepare a microcapsule;

(2) Mixing the molted asphalt, the first microcapsule, the second microcapsule, the third microcapsule, and an optional antioxidant.

In step S1, the blending process may be carried out in a shearing machine, the operating conditions may include: a rotation speed of 2,000-4,000 r/min, and a time of 20-30min.

In step S1, the mass ratio of dosages of the active component, the emulsifier and water may be 1: (0.05-0.09): (6-9).

In some embodiments, step S1 is conducted with the following operation processes: dissolving the active component in water, subsequently adding the emulsifier, and then performing the high-speed shear emulsification at a rotational speed of 2,000-4,000 r/min.

In step S2, the pH of the oil-in-water emulsion is adjusted to 5 or less, preferably 2-4, before reacting the oil-in-water emulsion with the resin pre-polymer. The reagent used for adjusting the pH may be a conventional inorganic acid solution, such as dilute hydrochloric acid.

In step S2, the reaction of the oil-in-water emulsion with the resin pre-polymer is carried out under the stirring conditions, the stirring speed may be 400-800 r/min, the reaction temperature may be 60-90°C, and the time may be 1-5h.

In step S2, the filtering process may be suction filtration.

In step S2, the washing process may comprise washing with water and ethanol for two or more times, respectively.

In step S2, the drying process may be performed in a drying oven, the drying may be performed at a temperature of 60-90°C for 5-10h.

In step S2, the resin pre-polymer may be one or more selected from the group consisting of melamine resin pre-polymer, urea formaldehyde resin pre-polymer and polymethyl methacrylate pre-polymer. In a case of preferably, the resin pre-polymer is melamine resin pre-polymer. The preparation method of the melamine resin pre-polymer may comprise: dissolving and mixing melamine with a formaldehyde solution and water, adjusting the pH to 7.5-9.5, and then carrying out the reaction under the stirring and constant temperature water bath condition of 60-90°C for 0.5-3.5h. The concentration of the formaldehyde solution may be within the range of 30-40wt.% during the preparation process of the melamine resin pre-polymer. The mass ratio of dosages of the melamine, the formaldehyde solution and water may be 1: (2-3): (8-10).

In step S3, the mass ratio of the dosages of the rubber material, the volatile solvent and water in step S3 may be 1: (10-20): (50-150).

In the method of the present invention, the active component may be at least one selected from the group consisting of aldehyde compounds, ketone compounds, alcohol compounds, phenol compounds and ester compounds or a combination thereof. In particular, the aldehyde compound, the ketone compound, the alcohol compound, the phenolic compound and the ester compound is selected from the same substances as previously described.

In the method of the present invention, the rubber material may be at least one selected from the group consisting of chlorinated rubber, styrene-butadiene rubber and chloroprene rubber.

In the method of the present invention, the emulsifier may be at least one selected from the group consisting sodium stearate, sodium lauryl sulphate, sodium dodecyl benzene sulfonate, cetyl trimethyl ammonium chloride, cetyl trimethyl ammonium bromide, cetyl dimethyl hydroxyethyl ammonium chloride, nonylphenol polyoxyethylene ether, octylphenol polyoxyethylene ether, and cetyl polyoxyethylene ether.

According to the method of the present invention, the volatile solvent may be at least one selected from the group consisting carbon tetrachloride, methylene dichloride and trichloroethylene.

The asphalt additive, an asphalt composition and a preparation method therefor in the present invention will be further described below with reference to examples. The examples are implemented under the premise of the technical solution of the present invention, and disclose the detailed embodiments and specific operation process, but the protection scopes of the present invention are not limited to the following examples.

Unless otherwise specified in the present invention, each of the experimental methods in the following examples was the conventional method in the field. Unless otherwise specified in the present invention, each of the experimental materials used in the following examples was commercially available.

Example 1

(1) 1 part by weight of 3,4-methylene dioxy benzaldehyde was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A1 was formed in the aqueous phase.

1 part by weight of myrcenol was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A2 was formed in the aqueous phase.

1 part by weight of ethyl cinnamate was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A3 was formed in the aqueous phase.

(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.

The dilute hydrochloric acid was dropwise added into 1 part by weight of the oil-in-water emulsion L-A1, the pH was adjusted to 2, 0.10 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A1 was obtained.

The dilute hydrochloric acid was dropwise added into 1 part by weight of the oil-in-water emulsion L-A2, the pH was adjusted to 2, 0.12 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A2 was obtained.

The dilute hydrochloric acid was dropwise added into 1 part by weight of the oil-in-water emulsion L-A3, the pH was adjusted to 2, 0.17 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A3 was obtained.

(3) 0.1 part by weight of chlorinated rubber was dissolved in 1 part by weight of dichloromethane, 1.00 part by weight of the pre-coat material Y-A1 was added, the raw materials were sufficiently stirred and mixed. The obtained mixture was added into 5 parts by weight of water, stirred at the rotational speed of 500 r/min, the temperature was raised till the solvent was volatilized, a microcapsule W-A1 was prepared, it had a size of 3-5$\mu$m and an elastic modulus of 0.5GPa, the capsule wall had a thickness of 1.2$\mu$m, the elastic modulus of the microcapsule and the thickness of the capsule wall satisfied the following calculation formula: $Y = 0.42X^2 - 0.92X + T$. The test results indicated that the microcapsule had a capsule core content of 45wt.% and a capsule wall content of 55wt.%, the mass ratio of an inner layer to an outer layer in the capsule wall was 5: 1.

0.1 part by weight of chlorinated rubber was dissolved in 1 part by weight of dichloromethane, 0.55 part by weight of the pre-coat material Y-A2 was added, the raw materials were sufficiently stirred and mixed. The obtained mixture was added into 5 parts by weight of water, stirred at the rotational speed of 500 r/min, the temperature was raised till the solvent was volatilized, a microcapsule W-A2 was prepared, it had a size of 5-7$\mu$m and an elastic modulus of 0.9GPa, the capsule wall had a thickness of 2.1$\mu$m, the elastic modulus of the microcapsule and the thickness of the capsule wall satisfied the following calculation formula: $Y = 0.42X^2 - 0.92X + T$. The test results indicated that the microcapsule had a capsule core content of 38wt.% and a capsule wall content of 62wt.%, the mass ratio of an inner layer to an outer layer in the capsule wall was 3: 1.

0.1 part by weight of chlorinated rubber was dissolved in 1 part by weight of dichloromethane, 0.43 part by weight of the pre-coat material Y-A3 was added, the raw materials were sufficiently stirred and mixed. The obtained mixture was added into 5 parts by weight of water, stirred at the rotational speed of 500 r/min, the temperature was raised till the solvent was volatilized, a microcapsule W-A3 was prepared, it had a size of 7-9$\mu$m and an elastic modulus of 2.2GPa, the capsule wall had a thickness of 3.1$\mu$m, the elastic modulus of the microcapsule and the thickness of the capsule wall satisfied the following calculation formula: $Y = 0.42X^2 - 0.92X + T$. The test results indicated that the microcapsule had a capsule core content of 30wt.% and a capsule wall content of 70wt.%, the mass ratio of an inner layer to an outer layer in the capsule wall was 2.7:1.

(4) 0.2 part by weight of the prepared microcapsule W-A1, 0.05 part by weight of the prepared microcapsule W-A2, 0.1 part by weight of the prepared microcapsule W-A3, and 0.1 part by weight of 3-(3,5-dimethyl-4-hydroxyphenyl) acrylic acid were added into 100 parts by weight of straight run asphalt (with a needle penetration degree of 70 1/10 mm), then stirred at a rotational speed of 800 r/min under the heating condition of 150°C for 3h, an asphalt composition P1 was prepared.

Example 2

(1) 1 part by weight of ionone was added into 7 parts by weight of water at 60°C, 0.06 part by weight of nonylphenol polyoxyethylene ether was added, the materials were subjected to the shear emulsification by a shearing machine with a rotational speed of 2,500 r/min for 25min, an oil-in-water type emulsion L-B 1 was formed in the aqueous phase.

1 part by weight of myrcenol was added into 7 parts by weight of water at 60°C, 0.06 part by weight of nonylphenol polyoxyethylene ether was added, the materials were subjected to the shear emulsification by a shearing machine with a rotational speed of 2,500 r/min for 25min, an oil-in-water type emulsion L-B2 was formed in the aqueous phase.

1 part by weight of phenethylethyl cinnamate was added into 7 parts by weight of water at 60°C, 0.06 part by weight of nonylphenol polyoxyethylene ether was added, the materials were subjected to the shear emulsification by a shearing machine with a rotational speed of 2,500 r/min for 25min, an oil-in-water type emulsion L-B3 was formed in the aqueous phase.

(2) 1 part by weight of melamine, 3 parts by weight of formaldehyde solution having a concentration of 37wt.%, and 10 parts by weight of deionized water were blended and dissolved in a three-neck flask, the pH was adjusted to 7.5, the three-neck flask was then placed in the constant temperature water bath condition of 80°C for reaction and stirring at 600 r/min for 1h, a melamine resin pre-polymer was prepared.

The dilute hydrochloric acid was dropwise added into 1 part by weight of the oil-in-water emulsion L-B1, the pH was adjusted to 4, 0.12 part by weight of the prepared melamine resin pre-polymer was slowly and dropwise added into the oil-in-water emulsion, stirred at a rotational speed of 600 r/min, the reaction was carried out at 70°C for 3h, after the completion of the reaction, the resulting mixed solution was subjected to suction filtration, washing with water and ethanol for twice, respectively, and drying in a drying oven at 70°C for 8h, a pre-coat material Y-B1 was obtained.

The dilute hydrochloric acid was dropwise added into 1 part by weight of the oil-in-water emulsion L-B2, the pH was adjusted to 4, 0.17 part by weight of the prepared melamine resin pre-polymer was slowly and dropwise added into the oil-in-water emulsion, stirred at a rotational speed of 600 r/min, the reaction was carried out at 70°C for 3h, after the completion of the reaction, the resulting mixed solution was subjected to suction filtration, washing with water and ethanol for twice, respectively, and drying in a drying oven at 70°C for 8h, a pre-coat material Y-B2 was obtained.

The dilute hydrochloric acid was dropwise added into 1 part by weight of the oil-in-water emulsion L-B3, the pH was adjusted to 4, 0.22 part by weight of the prepared melamine resin pre-polymer was slowly and dropwise added into the oil-in-water emulsion, stirred at a rotational speed of 600 r/min, the reaction was carried out at 70°C for 3h, after the completion of the reaction, the resulting mixed solution was subjected to suction filtration, washing with water and ethanol for twice, respectively, and drying in a drying oven at 70°C for 8h, a pre-coat material Y-B3 was obtained.

(3) 0.15 part by weight of chloroprene rubber was dissolved in 3 parts by weight of carbon tetrachloride, 1.40 parts by weight of the pre-coat material Y-B1 was added, the raw materials were sufficiently stirred and mixed. The obtained mixture was added into 10 parts by weight of water, stirred at the rotational speed of 600 r/min, the temperature was raised till the solvent was volatilized, a microcapsule W-B1 was prepared, it had a size of 2-4$\mu$m and an elastic modulus of 0.6GPa, the capsule wall had a thickness of 0.7μm, the elastic modulus of the microcapsule and the thickness of the capsule wall satisfied the following calculation formula: $Y = 0.42X^2 - 0.92X + T$. The test results indicated that the microcapsule had a capsule core content of 46wt.% and a capsule wall content of 54wt.%, the mass ratio of an inner layer to an outer layer in the capsule wall was 4.6:1.

0.15 part by weight of chloroprene rubber was dissolved in 3 parts by weight of carbon tetrachloride, 0.80 part by weight of the pre-coat material Y-B2 was added, the raw materials were sufficiently stirred and mixed. The obtained mixture was added into 10 parts by weight of water, stirred at the rotational speed of 600 r/min, the temperature was raised till the solvent was volatilized, a microcapsule W-B2 was prepared, it had a size of 5-7μm and an elastic modulus of 0.9GPa, the capsule wall had a thickness of 2.1μm, the elastic modulus of the microcapsule and the thickness of the capsule wall satisfied the following calculation formula: $Y = 0.42X^2 - 0.92X + T$. The test results indicated that the microcapsule had a capsule core content of 36wt.% and a capsule wall content of 64wt.%, the mass ratio of an inner layer to an outer layer in the capsule wall was 3. 1: 1.

0.15 part by weight of chloroprene rubber was dissolved in 3 parts by weight of carbon tetrachloride, 0.70 part by weight of the pre-coat material Y-B3 was added, the raw materials were sufficiently stirred and mixed. The obtained mixture was added into 10 parts by weight of water, stirred at the rotational speed of 600 r/min, the temperature was raised till the solvent was volatilized, a microcapsule W-B3 was prepared, it had a size of 7-9μm and an elastic modulus of 2.4GPa, the capsule wall had a thickness of 3.2μm, the elastic modulus of the microcapsule and the thickness of the capsule wall satisfied the following calculation formula: $Y = 0.42X^2 - 0.92X + T$. The test results indicated that the microcapsule had a capsule core content of 30wt. % and a capsule wall content of 70wt.%, the mass ratio of an inner layer to an outer layer in the capsule wall was 3.0:1.

(4) 0.05 part by weight of the prepared microcapsule W-B1, 0.2 part by weight of the prepared microcapsule W-B2, 0.1 part by weight of the prepared microcapsule W-B3, and 0.05 part by weight of 3,5-di-tert-butyl-4-hydroxy benzyl diethyl phosphonate were added into 100 parts by weight of straight run asphalt (with a needle penetration degree of 70 1/10 mm), then stirred at a rotational speed of 900 r/min under the heating condition of 140°C for 3h, an asphalt composition P2 was prepared.

Example 3

(1) 0.5 part by weight of 2,6-dimethyl-2,6-octadienal and 0.5 part by weight of neral were added into 6 parts by weight of water at 60°C, 0.09 part by weight of octylphenol polyoxyethylene ether was added, the materials were subjected to the shear emulsification by a shearing machine with a rotational speed of 3,000 r/min for 20min, an oil-in-water type emulsion L-C1 was formed in the aqueous phase.

1 part by weight of dihydromyrcenol was added into 6 parts by weight of water at 60°C, 0.09 part by weight of octylphenol polyoxyethylene ether was added, the materials were subjected to the shear emulsification by a shearing machine with a rotational speed of 3,000 r/min for 20min, an oil-in-water type emulsion L-C2 was formed in the aqueous phase.

1 part by weight of linalyl formate was added into 6 parts by weight of water at 60°C, 0.09 part by weight of octylphenol polyoxyethylene ether was added, the materials were subjected to the shear emulsification by a shearing machine with a rotational speed of 3,000 r/min for 20min, an oil-in-water type emulsion L-C3 was formed in the aqueous phase.

(2) 1 part by weight of melamine, 2 parts by weight of formaldehyde solution having a concentration of 37wt.%, and 9 parts by weight of deionized water were blended and dissolved in a three-neck flask, the pH was adjusted to 8, the three-neck flask was then placed in the constant temperature water bath condition of 70°C for reaction and stirring at 500 r/min for 2h, a melamine resin pre-polymer was prepared.

The dilute hydrochloric acid was dropwise added into 1 part by weight of the oil-in-water emulsion L-C1, the pH was adjusted to 3, 0.14 part by weight of the prepared melamine resin pre-polymer was slowly and dropwise added into the oil-in-water emulsion, stirred at a rotational speed of 500 r/min, the reaction was carried out at 65°C for 3h, after the completion of the reaction, the resulting mixed solution was subjected to suction filtration, washing with water and ethanol for twice, respectively, and drying in a drying oven at 90°C for 6h, a pre-coat material Y-C1 was obtained.

The dilute hydrochloric acid was dropwise added into 1 part by weight of the oil-in-water emulsion L-C2, the pH was adjusted to 3, 0.18 part by weight of the prepared melamine resin pre-polymer was slowly and dropwise added into the oil-in-water emulsion, stirred at a rotational speed of 500 r/min, the reaction was carried out at 65°C for 3h, after the completion of the reaction, the resulting mixed solution was subjected to suction filtration, washing with water and ethanol for twice, respectively, and drying in a drying oven at 90°C for 6h, a pre-coat material Y-C2 was obtained.

The dilute hydrochloric acid was dropwise added into 1 part by weight of the oil-in-water emulsion L-C3, the pH was adjusted to 3, 0.28 part by weight of the prepared melamine resin pre-polymer was slowly and dropwise added into the oil-in-water emulsion, stirred at a rotational speed of 500 r/min, the reaction was carried out at 65°C for 3h, after the completion of the reaction, the resulting mixed solution was subjected to suction filtration, washing with water and ethanol for twice, respectively, and drying in a drying oven at 90°C for 6h, a pre-coat material Y-C3 was obtained.

(3) 0.2 part by weight of styrene-butadiene rubber was dissolved in 3 parts by weight of dichloromethane, 1.34 parts by weight of the pre-coat material Y-C1 was added, the raw materials were sufficiently stirred and mixed. The obtained mixture was added into 25 parts by weight of water, stirred at the rotational speed of 700 r/min, the temperature was raised till the solvent was volatilized, a microcapsule W-C1 was prepared, it had a size of 3-5μm and an elastic modulus of 0.6GPa, the capsule wall had a thickness of 1.3μm, the elastic modulus of the microcapsule and the thickness of the capsule wall satisfied the following calculation formula: $Y = 0.42X^2 - 0.92X + T$. The test results indicated that the microcapsule had a capsule core content of 44wt.% and a capsule wall content of 56wt.%, the mass ratio of an inner layer to an outer layer in the capsule wall was 3.3:1.

0.2 part by weight of styrene-butadiene rubber was dissolved in 3 parts by weight of dichloromethane, 0.90 parts by weight of the pre-coat material Y-C2 was added, the raw materials were sufficiently stirred and mixed. The obtained mixture was added into 25 parts by weight of water, stirred at the rotational speed of 700 r/min, the temperature was raised till the solvent was volatilized, a microcapsule W-C2 was prepared, it had a size of 5-7μm and an elastic modulus of 1.1GPa, the capsule wall had a thickness of 2.3μm, the elastic modulus of the microcapsule and the thickness of the capsule wall satisfied the following calculation formula: $Y = 0.42X^2 - 0.92X + T$. The test results indicated that the microcapsule had a capsule core content of 36wt. % and a capsule wall content of 64wt.%, the mass ratio of an inner layer to an outer layer in the capsule wall was 2.5:1.

0.2 part by weight of styrene-butadiene rubber was dissolved in 3 parts by weight of dichloromethane, 0.85 part by weight of the pre-coat material Y-C3 was added, the raw materials were sufficiently stirred and mixed. The obtained mixture was added into 25 parts by weight of water, stirred at the rotational speed of 700 r/min, the temperature was raised till the solvent was volatilized, a microcapsule W-C3 was prepared, it had a size of 7-9μm and an elastic modulus of 2.7GPa, the capsule wall had a thickness of 3.4μm, the elastic modulus of the microcapsule and the thickness of the capsule wall satisfied the following calculation formula: $Y = 0.42X^2 - 0.92X + T$. The test results indicated that the microcapsule had a capsule core content of 27wt. % and a capsule wall content of 73wt.%, the mass ratio of an inner layer to an outer layer in the capsule wall was 2.8:1.

(4) 0.1 part by weight of the prepared microcapsule W-C1, 0.1 part by weight of the prepared microcapsule W-C2, 0.2 part by weight of the prepared microcapsule W-C3, 0.05 part by weight of 2,6-di-tert-butyl-p-methyl phenol, and 0.05 part by weight of bis(3,5-tri-tert-butyl-4-hydroxyphenyl) sulfide were added into 100 parts by weight of SBS modified asphalt (with a needle penetration degree of 60 1/10 mm), then stirred at a rotational speed of 500 r/min under the heating condition of 170°C for 1h, an asphalt composition P3 was prepared.

Example 4

(1) 1 part by weight of p-methoxy benzaldehyde was added into 8 parts by weight of water at 60°C, 0.06 part by weight of sodium dodecyl benzene sulfonate was added, the materials were subjected to the shear emulsification by a shearing machine with a rotational speed of 4,000 r/min for 20min, an oil-in-water type emulsion L-D1 was formed in the aqueous phase.

1 part by weight of thymol was added into 8 parts by weight of water at 60°C, 0.06 part by weight of sodium dodecyl benzene sulfonate was added, the materials were subjected to the shear emulsification by a shearing machine with a rotational speed of 4,000 r/min for 20min, an oil-in-water type emulsion L-D2 was formed in the aqueous phase.

1 part by weight of methyl phenylacetate was added into 8 parts by weight of water at 60°C, 0.06 part by weight of sodium dodecyl benzene sulfonate was added, the materials were subjected to the shear emulsification by a shearing machine with a rotational speed of 4,000 r/min for 20min, an oil-in-water type emulsion L-D3 was formed in the aqueous phase.

(2) 1 part by weight of melamine, 3 parts by weight of formaldehyde solution having a concentration of 37wt.%, and 9 parts by weight of deionized water were blended and dissolved in a three-neck flask, the pH was adjusted to 7.5, the three-neck flask was then placed in the constant temperature water bath condition of 60°C for reaction and stirring at 700 r/min for 2h, a melamine resin pre-polymer was prepared.

The dilute hydrochloric acid was dropwise added into 1 part by weight of the oil-in-water emulsion L-D1, the pH was adjusted to 3, 0.11 part by weight of the prepared melamine resin pre-polymer was slowly and dropwise added into the oil-in-water emulsion, stirred at a rotational speed of 500 r/min, the reaction was carried out at 60°C for 5h, after the completion of the reaction, the resulting mixed solution was subjected to suction filtration, washing with water and ethanol for twice, respectively, and drying in a drying oven at 90°C for 6h, a pre-coat material Y-D1 was obtained.

The dilute hydrochloric acid was dropwise added into 1 part by weight of the oil-in-water emulsion L-D2, the pH was adjusted to 3, 0.15 part by weight of the prepared melamine resin pre-polymer was slowly and dropwise added into the oil-in-water emulsion, stirred at a rotational speed of 500 r/min, the reaction was carried out at 60°C for 5h, after the completion of the reaction, the resulting mixed solution was subjected to suction filtration, washing with water and ethanol for twice, respectively, and drying in a drying oven at 90°C for 6h, a pre-coat material Y-D2 was obtained.

The dilute hydrochloric acid was dropwise added into 1 part by weight of the oil-in-water emulsion L-D3, the pH was adjusted to 3, 0.21 part by weight of the prepared melamine resin pre-polymer was slowly and dropwise added into the oil-in-water emulsion, stirred at a rotational speed of 500 r/min, the reaction was carried out at 60°C for 5h, after the completion of the reaction, the resulting mixed solution was subjected to suction filtration, washing with water and ethanol for twice, respectively, and drying in a drying oven at 90°C for 6h, a pre-coat material Y-D3 was obtained.

(3) 0.17 part by weight of chlorinated rubber was dissolved in 1.7 parts by weight of dichloromethane, 1.69 parts by weight of the pre-coat material Y-D1 was added, the raw materials were sufficiently stirred and mixed. The obtained mixture was added into 18 parts by weight of water, stirred at the rotational speed of 800 r/min, the temperature was raised till the solvent was volatilized, a microcapsule W-D1 was prepared, it had a size of 3-5$\mu$m and an elastic modulus of 0.5GPa, the capsule wall had a thickness of 1.2$\mu$m, the elastic modulus of the microcapsule and the thickness of the capsule wall satisfied the following calculation formula: $Y = 0.42X^2 - 0.92X + T$. The test results indicated that the microcapsule had a capsule core content of 46wt. % and a capsule wall content of 54wt.%, the mass ratio of an inner layer to an outer layer in the capsule wall was 4.9: 1.

0.17 part by weight of chlorinated rubber was dissolved in 1.7 parts by weight of dichloromethane, 0.80 part by weight of the pre-coat material Y-D2 was added, the raw materials were sufficiently stirred and mixed. The obtained mixture was added into 18 parts by weight of water, stirred at the rotational speed of 800 r/min, the temperature was raised till the solvent was volatilized, a microcapsule W-D2 was prepared, it had a size of 5-7$\mu$m and an elastic modulus of 1.2GPa, the capsule wall had a thickness of 2.4$\mu$m, the elastic modulus of the microcapsule and the thickness of the capsule wall satisfied the following calculation formula: $Y = 0.42X^2 - 0.92X + T$. The test results indicated that the microcapsule had a capsule core content of 35wt.% and a capsule wall content of 65wt.%, the mass ratio of an inner layer to an outer layer in the capsule wall was 2.7: 1.

0.17 part by weight of chlorinated rubber was dissolved in 1.7 parts by weight of dichloromethane, 0.70 parts by weight of the pre-coat material Y-D3 was added, the raw materials were sufficiently stirred and mixed. The obtained mixture was added into 18 parts by weight of water, stirred at the rotational speed of 800 r/min, the temperature was raised till the solvent was volatilized, a microcapsule W-D3 was prepared, it had a size of 7-9$\mu$m and an elastic modulus of 2.5GPa, the capsule wall had a thickness of 3.3$\mu$m, the elastic modulus of the microcapsule and the thickness of the capsule wall satisfied the following calculation formula: $Y = 0.42X^2 - 0.92X + T$. The test results indicated that the microcapsule had a capsule core content of 28wt.% and a capsule wall content of 72wt.%, the mass ratio of an inner layer to an outer layer in the capsule wall was 2.7: 1.

(4) 0.1 part by weight of the prepared microcapsule W-D1, 0.2 part by weight of the prepared microcapsule W-D2, 0.2 part by weight of the prepared microcapsule W-D3, 0.05 part by weight of 3,5-di-tert-butyl-4-hydroxy benzyl diethyl phosphonate, and 0.05 part by weight of p-tert-butyl catechol were added into 100 parts by weight of nature asphalt (with a needle penetration degree of 50 1/10 mm), then stirred at a rotational speed of 800 r/min under the heating condition of 160°C for 2h, an asphalt composition P4 was prepared.

Example 5

(1) 1 part by weight of methyl ionone was added into 7 parts by weight of water at 60°C, 0.08 part by weight of cetyl trimethyl ammonium chloride was added, the materials were subjected to the shear emulsification by a shearing machine with a rotational speed of 3,000 r/min for 30min, an oil-in-water type emulsion L-E1 was formed in the aqueous phase.

1 part by weight of 3-propenyl-6-ethoxyphenol was added into 7 parts by weight of water at 60°C, 0.08 part by weight of cetyl trimethyl ammonium chloride was added, the materials were subjected to the shear emulsification by a shearing machine with a rotational speed of 3,000 r/min for 30min, an oil-in-water type emulsion L-E2 was formed in the aqueous phase.

1 part by weight of terpinyl acetate was added into 7 parts by weight of water at 60°C, 0.08 part by weight of cetyl trimethyl ammonium chloride was added, the materials were subjected to the shear emulsification by a shearing machine with a rotational speed of 3,000 r/min for 30min, an oil-in-water type emulsion L-E3 was formed in the aqueous phase.

(2) 1 part by weight of melamine, 2 parts by weight of formaldehyde solution having a concentration of 37wt.%,

and 9 parts by weight of deionized water were blended and dissolved in a three-neck flask, the pH was adjusted to 8, the three-neck flask was then placed in the constant temperature water bath condition of 90°C for reaction and stirring at 400 r/min for 3.5h, a melamine resin pre-polymer was prepared.

The dilute hydrochloric acid was dropwise added into 1 part by weight of the oil-in-water emulsion L-E1, the pH was adjusted to 2, 0.10 part by weight of the prepared melamine resin pre-polymer was slowly and dropwise added into the oil-in-water emulsion, stirred at a rotational speed of 800 r/min, the reaction was carried out at 90°C for 1h, after the completion of the reaction, the resulting mixed solution was subjected to suction filtration, washing with water and ethanol for twice, respectively, and drying in a drying oven at 60°C for 9h, a pre-coat material Y-E I was obtained.

The dilute hydrochloric acid was dropwise added into 1 part by weight of the oil-in-water emulsion L-E2, the pH was adjusted to 2, 0.15 part by weight of the prepared melamine resin pre-polymer was slowly and dropwise added into the oil-in-water emulsion, stirred at a rotational speed of 800 r/min, the reaction was carried out at 90°C for 1h, after the completion of the reaction, the resulting mixed solution was subjected to suction filtration, washing with water and ethanol for twice, respectively, and drying in a drying oven at 60°C for 9h, a pre-coat material Y-E2 was obtained.

The dilute hydrochloric acid was dropwise added into 1 part by weight of the oil-in-water emulsion L-E3, the pH was adjusted to 2, 0.22 part by weight of the prepared melamine resin pre-polymer was slowly and dropwise added into the oil-in-water emulsion, stirred at a rotational speed of 800 r/min, the reaction was carried out at 90°C for 1h, after the completion of the reaction, the resulting mixed solution was subjected to suction filtration, washing with water and ethanol for twice, respectively, and drying in a drying oven at 60°C for 9h, a pre-coat material Y-E3 was obtained.

(3) 0.25 part by weight of chlorinated rubber was dissolved in 5 parts by weight of dichloromethane, 1.48 parts by weight of the pre-coat material Y-E1 was added, the raw materials were sufficiently stirred and mixed. The obtained mixture was added into 30 parts by weight of water, stirred at the rotational speed of 700 r/min, the temperature was raised till the solvent was volatilized, a microcapsule W-E1 was prepared, it had a size of 3-5$\mu$m and an elastic modulus of 0.6GPa, the capsule wall had a thickness of 0.8$\mu$m, the elastic modulus of the microcapsule and the thickness of the capsule wall satisfied the following calculation formula: $Y = 0.42X^2 - 0.92X + T$. The test results indicated that the microcapsule had a capsule core content of 48wt. % and a capsule wall content of 52wt.%, the mass ratio of an inner layer to an outer layer in the capsule wall was 2.6:1.

0.25 part by weight of chlorinated rubber was dissolved in 5 parts by weight of dichloromethane, 1.37 parts by weight of the pre-coat material Y-E2 was added, the raw materials were sufficiently stirred and mixed. The obtained mixture was added into 30 parts by weight of water, stirred at the rotational speed of 700 r/min, the temperature was raised till the solvent was volatilized, a microcapsule W-E2 was prepared, it had a size of 5-7$\mu$m and an elastic modulus of 1.0GPa, the capsule wall had a thickness of 2.2$\mu$m, the elastic modulus of the microcapsule and the thickness of the capsule wall satisfied the following calculation formula: $Y = 0.42X^2 - 0.92X + T$. The test results indicated that the microcapsule had a capsule core content of 37wt.% and a capsule wall content of 63wt.%, the mass ratio of an inner layer to an outer layer in the capsule wall was 2.6:1.

0.25 part by weight of chlorinated rubber was dissolved in 5 parts by weight of dichloromethane, 0.98 part by weight of the pre-coat material Y-E1 was added, the raw materials were sufficiently stirred and mixed. The obtained mixture was added into 30 parts by weight of water, stirred at the rotational speed of 700 r/min, the temperature was raised till the solvent was volatilized, a microcapsule W-E3 was prepared, it had a size of 7-9$\mu$m and an elastic modulus of 2.4GPa, the capsule wall had a thickness of 3.2$\mu$m, the elastic modulus of the microcapsule and the thickness of the capsule wall satisfied the following calculation formula: $Y = 0.42X^2 - 0.92X + T$. The test results indicated that the microcapsule had a capsule core content of 29wt.% and a capsule wall content of 71wt.%, the mass ratio of an inner layer to an outer layer in the capsule wall was 2.5:1.

(4) 0.2 part by weight of the prepared microcapsule W-E1, 0.2 part by weight of the prepared microcapsule W-E2, 0.2 part by weight of the prepared microcapsule W-E3, 0.05 part by weight of 3-(3,5-di-tert-butyl-4-hydroxyphenyl) acrylic acid, and 0.05 part by weight of 3-(3,5-dimethyl-4-hydroxyphenyl) acrylic acid were added into 100 parts by weight of straight run asphalt (with a needle penetration degree of 70 1/10 mm), then stirred at a rotational speed of 1,000 r/min under the heating condition of 140°C for 3h, an asphalt composition P5 was prepared.

Comparative Example 1

The asphalt composition was prepared according to the method of Example 5, except that in step (4), the microcapsule W-E2 and the microcapsule W-E3 were replaced with the microcapsule W-E1 of the same weight, an asphalt composition D1 was prepared.

Comparative Example 2

The asphalt composition was prepared according to the method of Example 5, except that in step (4), the microcapsule W-E1 and the microcapsule W-E3 were replaced with the microcapsule W-E2 of the same weight, an asphalt composition D2 was prepared.

Comparative Example 3

The asphalt composition was prepared according to the method of Example 5, except that in step (4), the microcapsule W-E1 and the microcapsule W-E2 were replaced with the microcapsule W-E3 of the same weight, an asphalt composition D3 was prepared.

Comparative Example 4

(The Comparative Example was intended to compare with Example 1).
0.09 part by weight of 3,4-methylene dioxy benzaldehyde, 0.02 part by weight of myrcenol, 0.03 part by weight of ethyl cinnamate, and 0.1 parts by weight of 3-(3,5-dimethyl-4-hydroxyphenyl) acrylic acid are added to 100 parts by weight of straight-run asphalt (with a needle penetration degree of 70 1/10 mm), then stirred at a rotational speed of 800 r/min under the heating condition of 150°C for 3h, an asphalt composition D4 was prepared.

Comparative Example 5

(The Comparative Example was intended to compare with Example 1).

(1) 1 part by weight of 3,4-methylene dioxy benzaldehyde was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A1 was formed in the aqueous phase.

1 part by weight of myrcenol was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A2 was formed in the aqueous phase.
1 part by weight of ethyl cinnamate was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A3 was formed in the aqueous phase.
(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.
The dilute hydrochloric acid was dropwise added into 1 part by weight of the oil-in-water emulsion L-A1, the pH was adjusted to 2, 0.10 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A1 was obtained.
The dilute hydrochloric acid was dropwise added into 1 part by weight of the oil-in-water emulsion L-A2, the pH was adjusted to 2, 0.12 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A2 was obtained.
The dilute hydrochloric acid was dropwise added into 1 part by weight of the oil-in-water emulsion L-A3, the pH was adjusted to 2, 0.17 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A3 was obtained.
(3) 0.2 part by weight of the prepared pre-coat material Y-A1, 0.05 part by weight of the prepared pre-coat material Y-A2, 0.1 part by weight of the prepared pre-coat material Y-A3, and 0.1 part by weight of 3- (3,5-dimethyl-4-hydroxyphenyl) acrylic acid were added into 100 parts by weight of straight run asphalt (with a needle penetration degree of 70 1/10 mm), then stirred at a rotational speed of 800 r/min under the heating condition of 150°C for 3h, an asphalt composition D5 was prepared.

Comparative Example 6

(The Comparative Example was intended to compare with Example 1).

(1) 1 part by weight of 3,4-methylene dioxy benzaldehyde was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A1 was formed in the aqueous phase.

1 part by weight of myrcenol was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A2 was formed in the aqueous phase.
1 part by weight of ethyl cinnamate was added into 9 parts by weight of water at 60°C, 0.05 part by weight of cetyl trimethyl ammonium bromide was added, the materials were subjected to the shear emulsification by a shearing machine with a rotational speed of 2,000 r/min for 30min, an oil-in-water type emulsion L-A3 was formed in the aqueous phase.
(2) 1 part by weight of melamine, 2 parts by weight of formaldehyde solution having a concentration of 37wt.%, and 8 parts by weight of deionized water were blended and dissolved in a three-neck flask, the pH was adjusted to 8.5, the three-neck flask was then placed in the constant temperature water bath condition of 60°C for reaction and stirring at 800 r/min for 0.5h, a melamine resin pre-polymer was prepared.
The dilute hydrochloric acid was dropwise added into 1 part by weight of the oil-in-water emulsion L-A1, the pH was adjusted to 2, 0.10 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A1 was obtained.
The dilute hydrochloric acid was dropwise added into 1 part by weight of the oil-in-water emulsion L-A2, the pH was adjusted to 2, 0.12 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A2 was obtained.
The dilute hydrochloric acid was dropwise added into 1 part by weight of the oil-in-water emulsion L-A3, the pH was adjusted to 2, 0.17 part by weight of the prepared melamine resin pre-polymer was slowly and dropwise added into the oil-in-water emulsion, stirred at a rotational speed of 700 r/min, the reaction was carried out at 75°C for 2h, after the completion of the reaction, the resulting mixed solution was subjected to suction filtration, washing with water and ethanol for twice, respectively, and drying in a drying oven at 60°C for 10h, a pre-coat material Y-A3 was obtained.
(3) 0.1 part by weight of chlorinated rubber, 1.00 part by weight of the pre-coat material Y-A1 and 5 parts by weight of water were mixed, the raw materials were stirred, a microcapsule W-F1 was prepared, wherein the chlorinated rubber cannot be encapsulated at the outmost layer of the microcapsule in a membranous form, the microcapsule had a size of 4-6$\mu$m and an elastic modulus of 0.8GPa, the capsule wall had a thickness of 2.3$\mu$m, the elastic modulus of the microcapsule and the thickness of the capsule wall did not satisfy the following calculation formula: $Y = 0.42X^2 - 0.92X + T$.
0.1 part by weight of chlorinated rubber, 0.55 part by weight of the pre-coat material Y-A2 and 5 parts by weight of water were mixed, the raw materials were stirred, a microcapsule W-F2 was prepared, wherein the chlorinated rubber cannot be encapsulated at the outmost layer of the microcapsule in a membranous form, the microcapsule had a size of 6-8$\mu$m and an elastic modulus of 1.9GPa, the capsule wall had a thickness of 3.4$\mu$m, the elastic modulus of the microcapsule and the thickness of the capsule wall did not satisfy the following calculation formula: $Y = 0.42X^2 - 0.92X + T$.
0.1 part by weight of chlorinated rubber, 0.43 part by weight of the pre-coat material Y-A3 and 5 parts by weight of water were mixed, the raw materials were stirred, a microcapsule W-F3 was prepared, wherein the chlorinated rubber cannot be encapsulated at the outmost layer of the microcapsule in a membranous form, the microcapsule had a size of 8-10$\mu$m and an elastic modulus of 2.5GPa, the capsule wall had a thickness of 4.0$\mu$m, the elastic modulus of the microcapsule and the thickness of the capsule wall did not satisfy the following calculation formula: $Y = 0.42X^2 - 0.92X + T$.
(4) 0.2 part by weight of the prepared pre-coat material W-F1, 0.05 part by weight of the prepared pre-coat material W-F2, 0.1 part by weight of the prepared pre-coat material W-F3, and 0.1 part by weight of 3-(3,5-dimethyl-4-hydroxyphenyl) acrylic acid were added into 100 parts by weight of straight run asphalt (with a needle penetration degree of 70 1/10 mm), then stirred at a rotational speed of 800 r/min under the heating condition of 150°C for 3h, an asphalt composition D6 was prepared.

Comparative Example 7

(The Comparative Example was intended to compare with Example 1).

The microcapsules were prepared according to the method of Example 1, except that in step (1), the dosage of water was raised to 15 parts by weight, and the dosage of chlorinated rubber was increased to 0.50 parts by weight.

The microcapsule W-G1 was obtained, it had a size of 4-6μm and an elastic modulus of 1.0GPa, the capsule wall had a thickness of 1.7μm, the elastic modulus of the microcapsule and the thickness of the capsule wall did not satisfy the following calculation formula: $Y = 0.42X^2 - 0.92X + T$.

The microcapsule W-G2 was obtained, it had a size of 6-8μm and an elastic modulus of 2.3GPa, the capsule wall had a thickness of 2.7μm, the elastic modulus of the microcapsule and the thickness of the capsule wall did not satisfy the following calculation formula: $Y = 0.42X^2 - 0.92X + T$.

The microcapsule W-G3 was obtained, it had a size of 8-10μm and an elastic modulus of 3.7GPa, the capsule wall had a thickness of 3.6μm, the elastic modulus of the microcapsule and the thickness of the capsule wall did not satisfy the following calculation formula: $Y = 0.42X^2 - 0.92X + T$.

(4) 0.2 part by weight of the prepared microcapsule W-G1, 0.05 part by weight of the prepared microcapsule W-G2, 0.1 part by weight of the prepared microcapsule W-G3, and 0.1 part by weight of 3-(3,5-dimethyl-4-hydroxyphenyl) acrylic acid were added into 100 parts by weight of straight run asphalt (with a needle penetration degree of 70 1/10 mm), then stirred at a rotational speed of 800 r/min under the heating condition of 150°C for 3h, an asphalt composition D7 was prepared.

Test Example 1

The asphalt fumes were tested on the asphalt compositions prepared in the aforementioned Examples and Comparative Examples by using the straight run asphalt (with a needle penetration degree of 70 1/10 mm), the natural asphalt (with a needle penetration degree of 50 1/10 mm), and the SBS-modified asphalt (with a needle penetration degree of 60 1/10 mm) as the asphalt matrix, in particularly, the asphalt fumes were enriched and collected under the heating condition of 163°C for 6h, the asphalt fumes were tested and analyzed by using the gas chromatograph and the total hydrocarbon analyzer.

Table 1: test results of the asphalt fumes

| | Testing immediately after enrichment | | Testing after placing for two weeks | |
|---|---|---|---|---|
| | Sulfides /ppm | Total hydrocarbon /(mg/m$^3$)×10$^3$ | Sulfides /ppm | Total hydrocarbon /(mg/m$^3$)×10$^3$ |
| Straight-run asphalt | 168 | 4.6 | 165 | 4.3 |
| Modified asphalt | 179 | 5.3 | 175 | 5.1 |
| Natural asphalt | 125 | 3.5 | 124 | 3.3 |
| Example 1 | 59 | 2.3 | 58 | 2.2 |
| Example 2 | 57 | 2.1 | 53 | 1.8 |
| Example 3 | 56 | 2.0 | 55 | 1.9 |
| Example 4 | 38 | 1.4 | 37 | 1.3 |
| Example 5 | 46 | 1.5 | 45 | 1.4 |
| Comparative Example 1 | 66 | 2.7 | 64 | 2.7 |
| Comparative Example 2 | 71 | 3.5 | 69 | 3.4 |
| Comparative Example 3 | 74 | 3.5 | 73 | 3.3 |
| Comparative Example 4 | 75 | 3.1 | 152 | 4.1 |
| Comparative Example 5 | 114 | 4.3 | 113 | 4.2 |
| Comparative Example 6 | 103 | 4.2 | 101 | 4.1 |
| Comparative Example 7 | 93 | 4.0 | 92 | 3.8 |

As can be seen from the results of Table 1, the asphalt additives and asphalt compositions according to the present invention allow the release of different active components at different slow release rates, the three microcapsules having different slow release speeds are used in combination, thereby effectively reducing the emission of asphalt fumes and reducing the pollution to the environment.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

**Claims**

1. An asphalt additive, is **characterized in that** the asphalt additive comprises a first microcapsule, a second microcapsule, and a third microcapsule, wherein the first microcapsule, the second microcapsule, and the third microcapsule each comprise a capsule core and a capsule wall, the capsule core is wrapped in the capsule wall, the capsule core comprises an active component; the capsule wall thickness of the first microcapsule is within the range of 0.5-2$\mu$m, the capsule wall thickness of the second microcapsule is greater than 2$\mu$m and less than or equal to 3$\mu$m, and the capsule wall thickness of the third microcapsule is greater than 3$\mu$m and less than or equal to 5$\mu$m.

2. The asphalt additive according to claim 1, wherein the mass ratio of the first microcapsule, the second microcapsule, and the third microcapsule is 1: (0.25-4): (0.25-4).

3. The asphalt additive according to claim 1 or 2, wherein the capsule wall in the first microcapsule, the second microcapsule and the third microcapsule comprises: an inner wall layer made of resin, and an outer wall layer made of a rubber material;
preferably, the mass ratio of the inner wall layer and the outer wall layer is (2.4-5) :1.

4. The asphalt additive according to claim 3, wherein the resin is at least one selected from the group consisting of melamine resin, urea formaldehyde resin and polymethyl methacrylate, preferably melamine resin.

5. The asphalt additive according to claim 3, wherein the rubber material is at least one selected from the group consisting of chlorinated rubber, styrene-butadiene rubber, and chloroprene rubber.

6. The asphalt additive according to any one of claims 1-5, wherein in the first microcapsule, the second microcapsule and the third microcapsule, the elastic modulus of the microcapsule and the thickness of the capsule wall satisfy the following formula:

$$Y = 0.42X^2 - 0.92X + T$$

wherein Y is the elastic modulus of the microcapsule, and the unit thereof is GPa; X is the thickness of the capsule wall, and the unit thereof is $\mu$m; and T is 1$\pm$0.1;
the elastic modulus of the microcapsule is obtained by performing a mechanical property test on the microcapsule by using a nano-indentation instrument, and the thickness of the capsule wall is obtained by performing a frozen section test on the microcapsule by using a scanning electron microscope.

7. The asphalt additive according to any one of claims 1-6, wherein the mass ratio of the capsule core to the capsule wall in the first microcapsule is 1: (0.9-1.5); the mass ratio of the capsule core to the capsule wall in the second microcapsule is 1: (1.5-2.2); the mass ratio of the capsule core to the capsule wall in the third microcapsule is 1: (2.2-3).

8. The asphalt additive according to any one of claims 1-7, wherein the active component is an inhibitor for inhibiting the release of asphalt fumes, preferably at least one selected from the group consisting of aldehyde compounds, ketone compounds, alcohol compounds, phenol compounds and ester compounds;

preferably, the aldehyde compounds are selected from the group consisting of fatty aldehyde having 7 or more carbon atoms and aromatic aldehyde having 6 or more carbon atoms, more preferably at least one selected from the group consisting of p-methyl benzaldehyde, decyl aldehyde, o-carboxy benzaldehyde, p-isopropyl benzaldehyde, cinnamyl aldehyde, p-hydroxy benzaldehyde, p-methoxy benzaldehyde, 2-methyl-3-(3,4-methylene-dioxyphenyl) propyl aldehyde, 3,4-methylene dioxy benzaldehyde, 3-(4-isopropyl phenyl)-2-methyl propyl aldehyde, ethyl vanillin, phenyl acetaldehyde, anisaldehyde, nonadien-2,6-aldehyde, 2,6-dimethyl-2,6-octadienal, vanillin, citronellal, neral, hydroxyl methyl pentyl cyclohexene acetal, p-diethylamino benzaldehyde, and undecylenic aldehyde;

preferably, the ketone compounds are selected from the group consisting of aliphatic ketones having 8 or more carbon atoms and aromatic ketones having 8 or more carbon atoms, more preferably at least one selected from the group consisting of 6-methyl-3,5-heptadiene-2-one, 2-undecanone, acetophenone, ionone, irone, methyl ionone, damascenone and dihydro damascenone;

preferably, the alcohol compounds are alcohols with more than 6 carbon atoms, more preferably at least one selected from the group consisting of cinnamyl alcohol, menthol, cis-3,7-dimethyl-2,6-octanedienol, citronellol, geraniol, myrcenol, 2,6,10-trimethyl-2,6,10-dodecatrien-12-ol, lavender alcohol, benzyl alcohol, 2-phenyl ethanol, dihydromyrcenol, tetrahydrogeraniol and neralidol;

preferably, the phenol compounds are phenols having 6 or more carbon atoms, more preferably at least one selected from the group consisting of thymol, ethyl maltol, methyl maltol, 3-propenyl-6-ethoxyphenol and isoeugenol;

preferably, the ester compounds are esters with more than 7 carbon atoms, more preferably at least one selected from the group consisting of methyl salicylate, methyl cinnamate, ethyl cinnamate, ethyl phenylacetate, methyl phenylacetate, geranyl phenylacetate, phenethyl phenylacetate, isoamyl phenylacetate, benzyl salicylate, p-methylbenzyl acetate, benzyl acetate, isobutyl benzoate, isoamyl salicylate, benzyl cinnamate, phenethylethyl cinnamate, linalyl formate, linalyl acetate, linalyl isobutyrate, menthyl acetate, terpinyl acetate and bornyl acetate.

9. The asphalt additive according to claim 8, wherein the active component in the first microcapsule is selected from aldehyde compounds and ketone compounds, the active component in the second microcapsule is selected from alcohol compounds and phenol compounds, and the active component in the third microcapsule is selected from ester compounds.

10. An asphalt composition, is **characterized in that** the asphalt composition comprises asphalt and the asphalt additive according to any one of claims 1-9.

11. The asphalt composition according to claim 10, wherein the asphalt additive is contained in an amount of 0.1-2 parts by weight, preferably 0.15-0.6 part by weight, relative to 100 parts by weight of the asphalt.

12. The asphalt composition according to claim 10 or 11, where the asphalt composition further comprises an antioxidant, which is contained in an amount of 0.01-0.1 parts by weight, relative to 100 parts by weight of the asphalt.

13. The asphalt composition according to claim 12, wherein the antioxidant is at least one selected from the group consisting of bis(3,5-tri-tert-butyl-4-hydroxyphenyl) sulfide, p-tert-butyl catechol, 3,5-di-tert-butyl-4-hydroxy benzyl diethyl phosphonate, β-(3,5-di-tert-butyl-4-hydroxyphenyl) propionate n-octadecanol ester, β-(3,5-di-tert-butyl-4-hydroxyphenyl) propionate isooctanol ester, 4,4'-thiobis(6-tert-butyl-3-methylphenol), tetra[β-(3,5-di-tert-butyl-4-hydroxyphenyl)propionate] pentaerythritol ester, 1,3,5-trimethyl-2,4,6-tris (3,5-di-tert-butyl-4-hydroxybenzyl) benzene, 2,6-di-tert-butyl-p-methyl phenol, 3,5-di-tert-butyl-4-hydroxybenzoic acid, 3-(3,5-di-tert-butyl-4-hydroxyphenyl) propanoic acid, 3-(3,5-di-tert-butyl-4-hydroxyphenyl) acrylic acid, 3-(3,5-dimethyl-4-hydroxyphenyl) acrylic acid, 3-(3,5-dimethoxy-4-hydroxyphenyl) acrylic acid, and 3-(3-methoxy-4-hydroxyphenyl) acrylic acid.

14. The asphalt composition according to any one of claims 10-13, wherein the asphalt is at least one selected from the group consisting of straight-run asphalt, polymer-modified asphalt, and natural asphalt; preferably, the needle penetration degree of the asphalt is 30-210 1/10 mm.

15. A method for preparing the asphalt composition according to any one of claims 10-14, is **characterized in that** the method comprises the following processes:

(1) Preparing a first microcapsule, a second microcapsule and a third microcapsule respectively, the preparation process includes the following steps:

S1: blending an active component, an emulsifier and water to form an oil-in-water emulsion;
S2: reacting the oil-in-water emulsion with a resin pre-polymer, then filtering, washing and drying to obtain a pre-coat material;
S3: mixing a rubber material with the pre-coat material in the presence of a volatile solvent, and then mixing the obtained mixture with water, raising the temperature till volatilization of the volatile solvent to prepare a microcapsule;

(2) Mixing the molted asphalt, the first microcapsule, the second microcapsule, the third microcapsule, and an optional antioxidant.

16. The method according to claim 15, wherein the mass ratio of dosages of the active component, the emulsifier and water in step S1 is 1: (0.05-0.09): (6-9).

17. The method according to claim 15, wherein the pH of the oil-in-water emulsion is adjusted to 5 or less, preferably 2-4, before reacting the oil-in-water emulsion with the resin pre-polymer in step S2.

18. The method according to claim 15 or 17, wherein the resin pre-polymer in step S2 is a melamine resin pre-polymer;

preferably, the preparation method for the melamine resin pre-polymer comprises: dissolving and mixing melamine with a formaldehyde solution and water, adjusting the pH to 7.5-9.5, and then carrying out the reaction under the stirring and constant temperature water bath condition of 60-90°C for 0.5-3.5h;
preferably, the formaldehyde solution has a concentration within the range of 30-40 wt.%;
preferably, the mass ratio of dosages of the melamine, the formaldehyde solution and water is 1: (2-3): (8-10).

19. The method according to claim 15, wherein the mass ratio of the dosages of the rubber material, the volatile solvent and water in step S3 is 1: (10-20): (50-150).

20. The method according to any one of claims 15-19, the emulsifier is at least one selected from the group consisting sodium stearate, sodium lauryl sulphate, sodium dodecyl benzene sulfonate, cetyl trimethyl ammonium chloride, cetyl trimethyl ammonium bromide, cetyl dimethyl hydroxyethyl ammonium chloride, nonylphenol polyoxyethylene ether, octylphenol polyoxyethylene ether, and cetyl polyoxyethylene ether.

21. The method according to any one of claims 15-20, wherein the volatile solvent is at least one selected from the group consisting carbon tetrachloride, methylene dichloride and trichloroethylene.

## INTERNATIONAL SEARCH REPORT

| International application No. |
|---|
| **PCT/CN2023/128369** |

**A.    CLASSIFICATION OF SUBJECT MATTER**

C08L95/00(2006.01)i;  B01J13/02(2006.01)i;  C08K9/10(2006.01)i

According to International Patent Classification (IPC) or to both national classification and IPC

**B.    FIELDS SEARCHED**

Minimum documentation searched (classification system followed by classification symbols)

IPC: C08L B01J C08K

Documentation searched other than minimum documentation to the extent that such documents are included in the fields searched

Electronic data base consulted during the international search (name of data base and, where practicable, search terms used)

CNABS: CNTXT; CNKI; DWPI; ENTXT; VEN; STN; ISI Web of Science: 中国石油, 中石化, 宋乐春, 李志军, 曹鹏, 李臣泽, 王兴越, 沥青, 胶囊, 微米, 缓释, asphalt, +capsule, μm, slowly releas+

**C.    DOCUMENTS CONSIDERED TO BE RELEVANT**

| Category* | Citation of document, with indication, where appropriate, of the relevant passages | Relevant to claim No. |
|---|---|---|
| A | CN 114699996 A (HEBEI XIONG'AN RONGWU EXPRESSWAY CO., LTD. et al.) 05 July 2022 (2022-07-05)<br>claim 3 | 1-21 |
| A | CN 106398246 A (CHANG'AN UNIVERSITY) 15 February 2017 (2017-02-15)<br>entire document | 1-21 |
| A | CN 112745530 A (CHINA PETROLEUM & CHEMICAL CORP. et al.) 04 May 2021 (2021-05-04)<br>entire document | 1-21 |
| A | EP 3702411 A1 (COMPANIA ESPANOLA DE PETROLEOS S.A.U. (CEPSA) et al.) 02 September 2020 (2020-09-02)<br>entire document | 1-21 |
| A | US 2019315655 A1 (SHELL OIL CO.) 17 October 2019 (2019-10-17)<br>entire document | 1-21 |
| A | US 2022135885 A1 (CENOVUS ENERGY INC.) 05 May 2022 (2022-05-05)<br>entire document | 1-21 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2024** | **17 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/128369**

| Patent document cited in search report | | | Publication date (day/month/year) | Patent family member(s) | | | Publication date (day/month/year) |
|---|---|---|---|---|---|---|---|
| CN | 114699996 | A | 05 July 2022 | CN | 114699996 | B | 17 February 2023 |
| CN | 106398246 | A | 15 February 2017 | CN | 106398246 | B | 05 April 2019 |
| CN | 112745530 | A | 04 May 2021 | CN | 112745530 | B | 10 January 2023 |
| EP | 3702411 | A1 | 02 September 2020 | WO | 2020173923 | A1 | 03 September 2020 |
| | | | | PT | 2020173923 | B | 08 April 2022 |
| | | | | ES | 2786319 | A2 | 09 October 2020 |
| | | | | ES | 2786319 | R1 | 21 October 2020 |
| | | | | ES | 2786319 | B2 | 13 May 2021 |
| US | 2019315655 | A1 | 17 October 2019 | CA | 3039289 | A1 | 19 April 2018 |
| | | | | AR | 109910 | A1 | 06 February 2019 |
| | | | | WO | 2018068728 | A1 | 19 April 2018 |
| | | | | CN | 109790322 | A | 21 May 2019 |
| US | 2022135885 | A1 | 05 May 2022 | CA | 3137253 | A1 | 03 May 2022 |
| | | | | US | 11820945 | B2 | 21 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311125688
- CN 101842426 A
- CN 109749466 A
- CN 103242496 A